# EUROPEAN PATENT APPLICATION

(11) **EP 2 233 516 A1**
(43) Date of publication of application: **29.09.2010**
(21) Application number: 08800830.5
(22) Date of filing: 10.09.2008
(51) Int. Cl.: C08J 9/10, C08L 23/04, C08L 23/10

(54) **DEGRADABLE ENVIRONMENT-FRIENDLY TYPE POLYPROPYLENE (PP) FOAM PLASTIC AND PREPARATION METHOD THEREOF**

(30) Priority: 15.01.2008 CN 200810070485
(71) Applicant: Quanzhou Gongyuan Textile Co., Ltd, Fujian 362121 (CN)
(72) Inventor: HUANG, Zhenji, Quanzhou Fujian 362121 (CN)
(74) Representative: Garavelli, Paolo
(86) International application number: PCT/CN2008/072318
(87) International publication number: WO 2009/089698

(57) **Abstract**

An environment-friendly type polypropylene foamed plastic and a preparation method thereof. The foamed plastic utilizes plastic elastomer as basis material, and a third monomer is led in as crosslinking co-agent to carry out crosslinking and control degradation products. Foamed plastic profile products are made by graft copolymerizing said monomer on polypropylene and crosslinking, and then internal mixing, open mixing, sheeting and foam molding with compatibilizer, filler, nucleating agent, crosslinking agent and foaming agent.

## Description

### Field of the invention

The present invention relates to a degradable environment-friendly type polypropylene foamed plastic and a preparation method thereof.

### Background of the invention

Compared with polystyrene (PS) foamed material, polyurethane (PU) foamed material, polyethylene (PE) foamed material and EVA foamed material, polypropylene (pp) foamed material has better heat resistance, mechanical properties and environmental suitability, so it is very popular in the market. However, because polypropylene (PP) is a crystalline polymer, and the block type of co-polypropylene is a co-polypropylene formed by leading propylene in ethylene chain, which is paracrystalline polymer; under the crystalline melting point, polypropylene (PP) is solid and does not flow, and above the crystalline melting point, the viscosity of the solution descends sharply, which results in that gas generated from the course of foaming is difficult to be encased and the bubbles can not be generated; and when the solution is transformed to crystal, a lot of heat is dissipated (high specific heat capacity), so it takes much time for the solution to be solidified. In the manufacturing of the traditional homopolypropylene, the performance of products made by foam process is poor. Especially, the production technique of polypropylene (pp) foamed synthetic material is difficult, and solutions of high strength and high viscosity and colloid with a certain amount gel are hard to be obtained, so the obtained solution is of poor toughness, low strength, poor performance of thermal forming and poor foaming property. In thermal foam molding, because of the breaking point force, the strength and the viscosity of the solution is low, the frothing percentage of foam molding is low, and it is difficult to obtain foamed plastic of high quality, so the range of application of solution is limited in the fields of thermal forming and foam material. Besides, the process of manufacturing is complicated and difficult, and the cost of production is high.

### Summary of the invention

The purpose of the present invention is to overcome the shortages of the present technique and to provide a degradable environment-friendly type polypropylene foamed plastic and a preparation method thereof.

The technical solution applied by the present invention is:
A degradable environment-friendly type polypropylene foamed plastic comprises a basis material, a compatibilizer, a filler, a nucleating agent, a crosslinking agent, a crosslinking co-agent and a foaming agent;
said basis material is copolypropylene (block copolymer) containing 2-5% ethylene, which has 90 weight parts of DP2000;
said compatibilizer is ethylene-methacrylic acid (EmAA) which has 5-10 weight parts;
said filler is talcum powder TA-1250, 8-20 weight parts;
said nucleating agent comprises zinc oxide (ZNO), zinc stearate (ZNST) and stearic acid (ST), which are used as agent for conducting heat, lubricating mold release; wherein zinc oxide (ZNO) has 0.5-1.5 weight parts, zinc stearate (ZNST) has 0.85-1.5 weight parts, stearic acid (ST) has 0.45-1.0 weight parts;
said crosslinking agent is dicumyl peroxide (DCP) which is used as evocating agent for oxidization and has 1.56-1.75 weight parts;
said crosslinking co-agent is TMATMP, which has 3-5weight parts;
said foaming agent is ADAC which has 0.6-3 weight parts;
said compatibilizer has 10 weight parts; said filler has 20 weight parts; in said nucleating agent zinc oxide (ZNO) has 1.5 weight parts, zinc stearate (ZNST) has 0.8 weight part, and stearic acid (ST) has 0.45 weight part; said crosslinking agent has 1.75 weight parts; said crosslinking co-agent has 3 weight parts; said foaming agent has 3 weight parts.

In a preferred embodiment, said basis material also contains M108R of 7 weight parts; said compatibilizer has 3 weight parts; said filler has 10 weight parts; in said nucleating agent zinc oxide (ZNO) has 0.5 weight part, zinc stearate (ZNST) has 1.5 weight parts, and stearic acid (ST) has 1.0 weight part; said crosslinking agent has 1.56 weight parts; said crosslinking co-agent has 3 weight parts; said foaming agent has 0.9 weight parts.

In a preferred embodiment, said basis material also contains M503 of 5 weight parts; said compatibilizer has 5 weight parts; said filler has 8 weight parts; in said nucleating agent zinc oxide (ZNO) has 0.5 weight part, zinc stearate (ZNST) has 1.5 weight parts, and stearic acid (ST) has 0.5 weight part; said crosslinking agent has 1.605 weight parts; said crosslinking co-agent has 5 weight parts; said foaming agent has 0.6 weight part.

A preparation method of a degradable environment-friendly type polypropylene foamed plastic comprises:
1. according to the bearing capacity of internal mixing machine and the given weight parts, take out each component;
2. reserve crosslinking agent and foaming agent, and throw other components in the chamber of the internal mixing machine which is mixing and compounding them for 10 minutes; control the temperature of gelatine to be 140°C, and the degree of dispersion satisfies the requirement in order that the grafting reaction can be finished;
3. then throw the reserved crosslinking agent and foaming agent into the gelatine after mixing and compounding, and continue to process them by shear mixing for 2 minutes, and control the chamber to a temperature of 150°C, if necessary the temperature can be adjusted by steam heating or chilled water cooling;
4. throw said gelatine into open mixing machine to mix said gelatine and bind them twice in order to achieve the best effect of dispersion for sheeting;
5. use sheet extruder to produce foamed plastic sheets, and the thickness of the plastic sheet is 2.5 mm, the length and width of it is respectively 80% of that of the mould, and then cool the plastic sheets below 40°C in order to pile them, and the height of the pile of plastic sheets should be no more than 30cm in order to prevent the sheets in the middle of the pile from being heated and deteriorating;
6. put a certain number of foamed plastic sheets in the mould of the forming machine of foam, and raise the temperature and pressure in order to facilitate the crosslinking reaction of the foamed plastic sheets, and control the temperature of the mould between 160°C and 185°C, and the foaming time of the mould of 1 mm thickness is 2-2.5 minutes;
7. release the pressure to obtain the foamed plastic sheets;
8. leave the foamed plastic sheets for 6 hours, and then cut, peel, shape and polish twice them in order to obtain products of foamed plastic.

In a preferred embodiment, said basis material also contains M108R, after said step 2 throw M108R into the gelatine after mixing and compounding and continue to process them by shear mixing for 2 minutes, and then follow said step 3 and the time of shear mixing is extended to 15 minutes, and unload the gelatine after melting and gelling of the polymer.

In a preferred embodiment, said basis material also contains M503, after said step 2 throw M503 into the gelatine after mixing and compounding and continue to process them by shear mixing for 2 minutes, and then follow said step 3 and the time of shear mixing is extended to 15 minutes, and unload the gelatine after melting and gelling of the polymer.

The present invention overcomes the shortage that the breaking point force, the strength and the viscosity of the solution is low in thermal foam molding of traditional HOPP. In the present invention, a third monomer is led in as crosslinking co-agent to carry out crosslinking and control degradation products and is used for graft copolymerizing and crosslinking of polypropylene, when the strength of the solution achieves a certain degree, the gas generated from the pyrogenation caused by foaming agent forms stable bubbles and then the bubbles become solidified in order to stabilize the foam molding. The poor property of the traditional technique is improved, and the improved products of PP utilizes plastic elastomer and elastomer of COPP as basis material. In the present invention, traditional equipment of EVA foaming and process of EVA foaming are used to produce PP foamed plastic products of various performances. The products in the present invention have superior mechanical properties and resistance to heat, water, and chemical corrosion, and the products can be recycled in order to lower the influence on the environment. Besides the application range of the products is wide.

The PP foamed plastic products in the present invention have good heat resistance, small thermal deformation, and the soften point is between 100°C-130°C; in the temperature range the PP foamed plastic products can be used for a long time. Without external force, the PP foamed plastic products do not deform at the temperature of 150°C. If the PP foamed plastic products are disinfected in boiling water at the temperature of 122°C, the PP foamed plastic products also have good resistance to water, so they has applicability for waterproofing, soundproofing, disinfection and keeping cold. Besides, the PP foamed plastic products in the present invention have good wear-resistance, high strength, high toughness, better insulating properties and resistance to most of chemicals. This because, in the present invention, some co-agents such as inhibitor, antioxidant, are added in order to make the products sunproof, heatproof, oxygen-resistant and prevent deterioration phenomenon caused by influence of climate. Besides, the co-agents also increase the resistance to impact at low temperature, the freeze resistance and color possibility (prevent the influence of ultraviolet rays and ozone), so the products of the present invention can be used as packing material, suitcase, automotive interior, insulating material, shoe material, ground mat, protecting jacket and so on. The application range of the products is wide. The rejected material of the products can be recycled and is degradable and environment-friendly. The main indexes of the products all meet standard requirements.

### Brief description of the drawings

Fig. 1 is the recipe graph of the present invention in three embodiments.
Fig. 2 is a process flow diagram for preparation in embodiment 1 of the present invention.
Fig. 3 is a process flow diagram for preparation in embodiment 2 of the present invention.
Fig. 4 is a process flow diagram for preparation in embodiment 3 of the present invention.

### Description of specific embodiments

Embodiment 1:

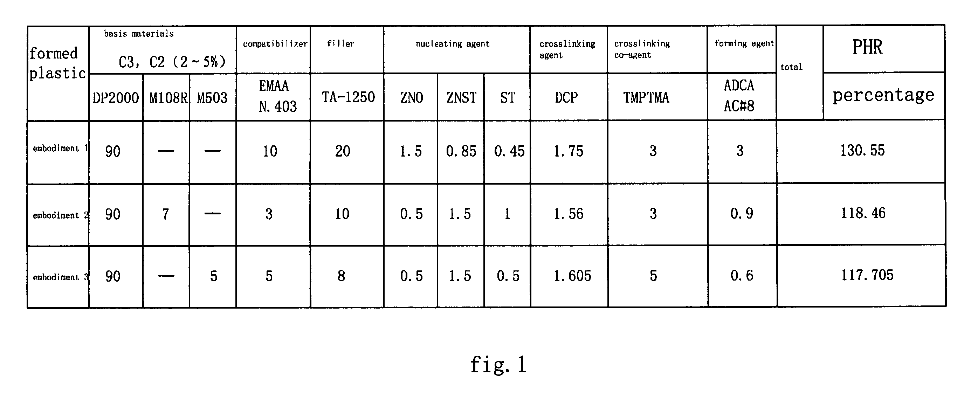

Referring to fig. 1, a degradable environment-friendly type polypropylene foamed plastic comprises a basis material, a compatibilizer, a filler, a nucleating agent, a crosslinking agent, a crosslinking co-agent and a foaming agent;

Basis material: copolypropylene (block copolymer) containing 2-5% ethylene, which has 90 weight parts of DP2000.

Compatibilizer: ethylene-methacrylic acid (EmAA) which has 10 weight parts.

Filler: talcum powder TA-1250, 20 weight parts.

Nucleating agent: zinc oxide (ZNO), zinc stearate (ZNST) and stearic acid (ST), which are used as agent for conducting heat, lubricating mold release; wherein zinc oxide (ZNO) has 1.5 weight parts, zinc stearate (ZNST) has 0.85 weight parts, stearic acid (ST) has 0.45 weight parts.

Crosslinking agent: dicumyl peroxide (DCP) which is used as evocating agent for oxidization and has 1.75 weight parts.

Crosslinking co-agent: 3 weight parts of TMATMP.

Foaming agent: 3 weight parts of ADAC.

A preparation method of said degradable environment-friendly type polypropylene foamed plastic comprises:
(1) according to the bearing capacity of internal mixing machine and the given weight parts, take out each component;
(2) reserve crosslinking agent and foaming agent, and throw other components in the chamber of the internal mixing machine which is mixing and compounding them for 10 minutes; control the temperature of gelatine to be 140°C, and the degree of dispersion satisfies the requirement in order that the grafting reaction can be finished;
(3) then throw the reserved crosslinking agent and foaming agent into the gelatine after mixing and compounding, and continue to process them by shear mixing for 2 minutes, and control the chamber to a temperature of 150°C, if necessary the temperature can be adjusted by steam heating or chilled water cooling;
(4) throw said gelatine into open mixing machine to mix said gelatine, and bind them twice in order to achieve the best effect of dispersion for sheeting;
(5) use sheet extruder to produce foamed plastic sheets, and the thickness of the plastic sheet is 2.5 mm, the length and width of it is respectively 80% of that of the mould, and then cool the plastic sheets below 40°C in order to pile them, and the height of the pile of plastic sheets should be no more than 30cm in order to prevent the sheets in the middle of the pile from being heated and deteriorating;
(6) put a certain number of foamed plastic sheets in the mould of the forming machine of foam, and raise the temperature and pressure in order to facilitate the crosslinking reaction of the foamed plastic sheets, and control the temperature of the mould between 160°C and 185°C, and the foaming time of the mould of 1 mm thickness is 2-2.5 minutes;
(7) release the pressure to obtain the foamed plastic sheets;
(8) leave the foamed plastic sheets for 6 hours, and then cut, peel, shape and polish twice them in order to obtain products of foamed plastic.

### Embodiment 2:

Referring to fig. 1, a degradable environment-friendly type polypropylene foamed plastic comprises a basis material, a compatibilizer, a filler, a nucleating agent, a crosslinking agent, a crosslinking co-agent and a foaming agent;

Basis material: copolypropylene (block copolymer) containing 2-5% ethylene, which has 90 weight parts of DP2000 and 7 weight parts of M108R.

Compatibilizer: ethylene-methacrylic acid (EmAA) which has 3 weight parts.

Filler: talcum powder TA-1250, 10 weight parts.

Nucleating agent: zinc oxide (ZNO), zinc stearate (ZNST) and stearic acid (ST), which are used as agent for conducting heat, lubricating mold release; wherein zinc oxide (ZNO) has 0.5 weight part, zinc stearate (ZNST) has 1.5 weight parts, stearic acid (ST) has 1.0 weight parts.

Crosslinking agent: dicumyl peroxide (DCP) which is used as evocating agent for oxidization and has 1.56 weight parts.

Crosslinking co-agent: 3 weight parts of TMATMP.

Foaming agent: 0.9 weight part of ADAC.

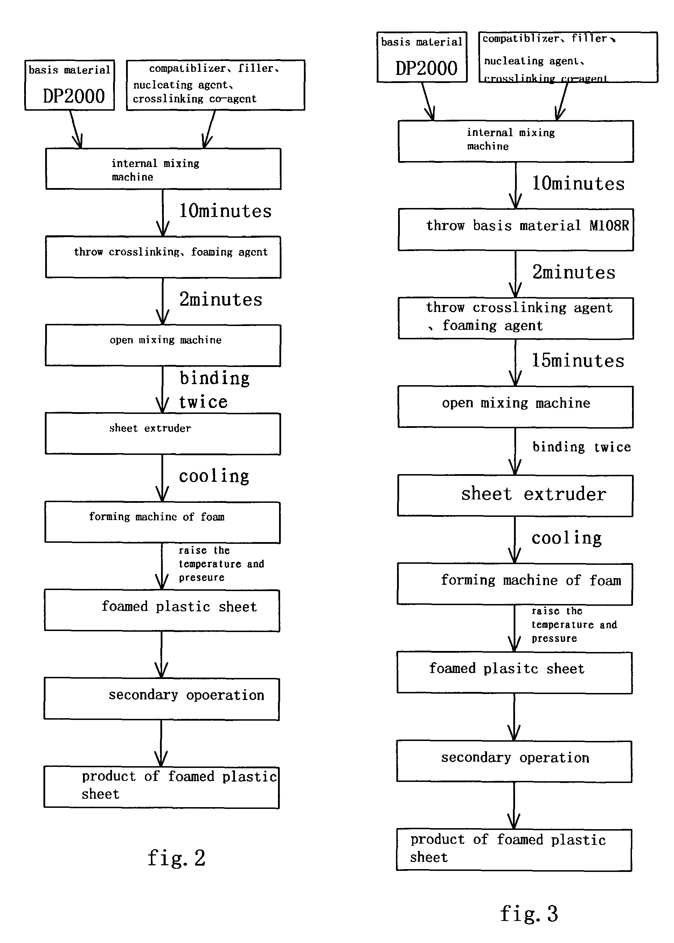

Referring to fig. 3, a preparation method of said degradable environment-friendly type polypropylene foamed plastic comprises:
(1) according to the bearing capacity of internal mixing machine and the given weight parts, take out each component;
(2) reserve crosslinking agent and foaming agent, and throw other components in the chamber of the internal mixing machine which is mixing and compounding them for 10 minutes; control the temperature of gelatine to be 140°C, and the degree of dispersion satisfies the requirement in order that the grafting reaction can be finished;
(3) throw M108R into the gelatine after mixing and compounding and continue to process them by shear mixing for 2 minutes;
(4) then throw the reserved crosslinking agent and foaming agent into the gelatine after mixing and compounding, and continue to process them by shear mixing for 15 minutes, and control the chamber to a temperature of 150°C, if necessary the temperature can be adjusted by steam heating or chilled water cooling;
(5) throw said gelatine into open mixing machine to mix said gelatine, and bind them twice in order to achieve the best effect of dispersion for sheeting;
(6) use a sheet extruder to produce foamed plastic sheets, and the thickness of the plastic sheet is 2.5 mm, the length and width of it is respectively 80% of that of the mould, and then cool the plastic sheets below 40°C in order to pile them, and the height of the pile of plastic sheets should be no more than 30cm in order to prevent the sheets in the middle of the pile from being heated and deteriorating;
(7) put a certain number of foamed plastic sheets in the mould of the forming machine of foam, and raise the temperature and pressure in order to facilitate the crosslinking reaction of the foamed plastic sheets, and control the temperature of mould between 160°C and 185°C, and the foaming time of mould of 1 mm thickness is 2-2.5 minutes;
(8) release the pressure to obtain the foamed plastic sheets;
(9) leave the foamed plastic sheets for 6 hours, and then cut, peel, shape and polish twice them in order to obtain products of foamed plastic.

### Embodiment 3:

Referring to fig. 1, a degradable environment-friendly type polypropylene foamed plastic comprises a basis material, a compatibilizer, a filler, a nucleating agent, a crosslinking agent, a crosslinking co-agent and a foaming agent;

Basis material: copolypropylene (block copolymer) containing 2-5% ethylene, which has 90 weight parts of DP2000 and 5 weight parts of M503.

Compatibilizer: ethylene-methacrylic acid (EmAA) which has 5 weight parts.

Filler: talcum powder TA-1250, 8 weight parts.

Nucleating agent: zinc oxide (ZNO), zinc stearate (ZNST) and stearic acid (ST), which are used as agent for conducting heat, lubricating mold release; wherein zinc oxide (ZNO) has 0.5 weight part, zinc stearate (ZNST) has 1.5 weight parts, stearic acid (ST) has 0.5 weight parts.

Crosslinking agent: dicumyl peroxide (DCP) which is used as evocating agent for oxidization and has 1.605 weight parts.

Crosslinking co-agent: 5 weight parts of TMATMP.

Foaming agent: 0.6 weight part of ADAC.

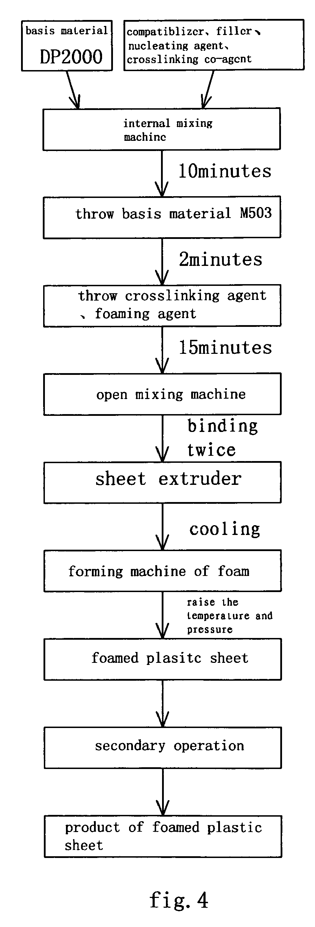

Referring to fig. 4, a preparation method of said degradable environment-friendly type polypropylene foamed plastic comprises:
(1) according to the bearing capacity of internal mixing machine and the given weight parts, take out each component;
(2) reserve crosslinking agent and foaming agent, and throw other components in the chamber of the internal mixing machine which is mixing and compounding them for 10 minutes; control the temperature of gelatine to be 140°C,and the degree of dispersion satisfies the requirement in order that the grafting reaction can be finished;
(3) throw M503 into the gelatine after mixing and compounding and continue to process them by shear mixing for 2 minutes
(4) then throw the reserved crosslinking agent and foaming agent into the gelatine after mixing and compounding, and continue to process them by shear mixing for 15 minutes, and control the chamber to a temperature of 150°C, if necessary the temperature can be adjusted by steam heating or chilled water cooling;
(5) throw said gelatine into open mixing machine to mix said gelatine, and bind them twice in order to achieve the best effect of dispersion for sheeting;
(6) use a sheet extruder to produce foamed plastic sheets, and the thickness of the plastic sheet is 2.5 mm, the length and width of it is respectively 80% of that of the mould, and then cool the plastic sheets below 40°C in order to pile them, and the height of the pile of plastic sheets should be no more than 30 cm in order to prevent the sheets in the middle of the pile from being heated and deteriorating;
(7) put a certain number of foamed plastic sheets in the mould of forming machine of foam, and raise the temperature and pressure in order to facilitate the crosslinking reaction of the foamed plastic sheets, and control the temperature of mould between 160°C and 185°C, and the foaming time of mould of 1 mm thickness is 2-2.5 minutes;
(8) release the pressure to obtain the foamed plastic sheets;
(9) leave the foamed plastic sheets for 6 hours, and then cut, peel, shape and polish twice them in order to obtain products of foamed plastic.

### Optimization in selection of raw materials

1. Basis material: copolypropylene (block copolymer) containing 2-5% ethylene, the properties of matter is following:
   - M180R (produced by CPCC): melt flow index 1.8±1.0, flexural modulus (Mpa) 900, tensile strength (Mpa) 21.6, ethylene content 2%
   - M503 (produced by CNPC): melt flow index 2.8, flexural modulus (Mpa) 1100, tensile strength (Mpa) 24.5, ethylene content 2%
   - DP2000 (produced by Dow chemical): melt flow index 2.0, flexural modulus (Mpa) 370, tensile strength (Mpa) 14, ethylene content 5%
   - DP3000 (produced by Dow chemical): melt flow index 8.0, flexural modulus (Mpa) 370, tensile strength (Mpa) 14, ethylene content 5%
2. Bulking and toughening agent: EmAA produced by E.I.Du Pontcompany, No.Nucrel 403
   EmAA can improve the toughness of the PP at the temperature of -30°C and improve the compatibility of filler and agents.
3. Filler: talcum powder TA-1250 (supplied by QingXin chemical company)
4. Nucleating agent: zinc oxide (ZNO), zinc stearate (ZNST) and stearic acid (ST) which are used as agent for conducting heat, lubricating mold release
5. Crosslinking agent: dicumyl peroxide (DCP) (produced by Sinopec Shanghai GaoQiao Petrochemical Corporation) which is used as evocating agent for oxidization
   The crosslinking mechanism of DCP: after free radicals is generated, the free radicals and free radicals of polymer macromolecule form a crosslinking coupling network, or the free radicals crosslink with interchain/ double bond side groups (EmAA) to form a network.
6. Crosslinking co-agent (curing agent or grafting mononer): TMATMP (produced by Jiangsu TianPeng chemical group)
   TMATMP has 3 function groups of acrylate, when crosslinking reaction of PP is proceeding with hyperoxide, the hyperoxide is heated and decomposed into free radicals, which interact with polymer to occur crosslinking reaction and produce free radicals of polymer macromolecule, or interact with allyl and double bond side groups to occur grafting reaction, the previous crosslinking can avoid that the chain of free radical of polymer macromolecule is broken in order to degrade PP into many micromolecules, and the viscosity decreases, so the gas generated from the solution is hard to form stable bubble. Therefore, the previous grafting reaction of allyl can improve the physical property of crosslinking polymer and increase the viscosity to reduce the fusion flow velocity and improve the operability.
7. Foaming agent: ADAC (produced by RongHe chemical Co. Ltd), power, particle size: 4-6 ηm, decomposition temperature: 195 °C, gas flow: 190cc/g, moderate rate of decomposition.

The main technical indexes of environment-friendly type polypropylene foamed plastic products provided in the present invention are:
1. Cleanliness: 6-10/kg
2. Tensile yield strength: ≧21.6Mpa
3. Cantilever beam impact strength: ≧29.5J/M
4. Flexural modulus: ≧0.90GPa
5. Low conversion temperature: ≧ -32°C
6. Heat-resistance: ≧ 125°C
7. Grayscale: ≦0.03%
8. Yellowness index: ≦4%
9. Type of polymer: block copolymer

All above is just a preferred embodiment of the present invention, so the present invention should not be limited in these embodiments. In a word, it should be understood that according to the scope of the present invention and the content of the description, all the various equivalent modifications and alterations will be apparent in the scope and spirit of this invention. Therefore, the scope and sprit of the invention is limited only by the claims.

### Industrial applicability

The present invention provides an environment-friendly type polypropylene foamed plastic and a preparation method thereof. The foamed plastic utilizes plastic elastomer as basis material, and a third monomer is led in as crosslinking co-agent to carry out crosslinking and control degradation products. Foamed plastic profile products are made by graft copolymerizing said monomer on polypropylene and crosslinking, and then internal mixing, open mixing, sheeting and foam molding with a compatibilizer, a filler, a nucleating agent, a crosslinking agent and a foaming agent. The products of the present invention has good heat-resistance, small thermal deformation, and their softening temperature is between 100-130°C; in the temperature range, they can be used for a long-term, and they are applicable in a wide scope; rejected material of the products can be recycled, degradable, environment-friendly. So the products of the present invention have a good Industrial applicability.

## Claims

1. A degradable environment-friendly type polypropylene foamed plastic, comprising: a basis material, a compatibilizer, a filler, a nucleating agent, a crosslinking agent, a crosslinking co-agent and a foaming agent;
said basis material being copolypropylene containing 2-5% ethylene, which has 90 weight parts of DP2000;
said compatibilizer being ethylene-methacrylic acid (EmAA) which has 5-10 weight parts;
said filler being talcum powder TA-1250, 8-20 weight parts;
said nucleating agent comprising zinc oxide (ZNO), zinc stearate (ZNST) and stearic acid (ST), which are used as agent for conducting heat, lubricating mold release, wherein zinc oxide (ZNO) has 0.5-1.5 weight parts, zinc stearate (ZNST) has 0.85-1.5 weight parts, stearic acid (ST) has 0.45-1.0 weight parts;
said crosslinking agent being dicumyl peroxide (DCP) which is used as evocating agent for oxidization and has 1.56-1.75 weight parts;
said crosslinking co-agent being TMATMP, which has 3-5weight parts;
said foaming agent being ADAC which has 0.6-3 weight parts.

2. Degradable environment-friendly type polypropylene foamed plastic according to claim 1, wherein said compatibilizer has 10 weight parts; said filler has 20 weight parts; in said nucleating agent zinc oxide (ZNO) has 1.5 weight parts, zinc stearate (ZNST) has 0.8 weight part, and stearic acid (ST) has 0.45 weight part; said crosslinking agent has 1.75 weight parts; said crosslinking co-agent has 3 weight parts; said foaming agent has 3 weight parts.

3. Degradable environment-friendly type polypropylene foamed plastic according to claim 1, wherein said basis material also contains M108R of 7 weight parts; said compatibilizer has 3 weight parts; said filler has 10 weight parts; in said nucleating agent zinc oxide (ZNO) has 0.5 weight part, zinc stearate (ZNST) has 1.5 weight parts, and stearic acid (ST) has 1.0 weight part; said crosslinking agent has 1.56 weight parts; said crosslinking co-agent has 3 weight parts; said foaming agent has 0.9 weight parts.

4. Degradable environment-friendly type polypropylene foamed plastic according to claim 1, wherein said basis material also contains M503 of 5 weight parts; said compatibilizer has 5 weight parts; said filler has 8 weight parts; in said nucleating agent zinc oxide (ZNO) has 0.5 weight part, zinc stearate (ZNST) has 1.5 weight parts, and stearic acid (ST) has 0.5 weight part; said crosslinking agent has 1.605 weight parts; said crosslinking co-agent has 5 weight parts; said foaming agent has 0.6 weight part.

5. Preparation method of a degradable environment-friendly type polypropylene foamed plastic according to claim 1, the method comprising:
(1) according to the bearing capacity of banbury mixer and the given weight parts, taking out each component;
(2) reserving the crosslinking agent and the foaming agent, and throwing the other components in the chamber of the internal mixing machine which is mixing and compounding them for 10 minutes; controlling the temperature of gelatine to be 140°C,and the degree of dispersion satisfies the requirement in order that the grafting reaction can be finished;
(3) then throwing the reserved crosslinking agent and foaming agent into the gelatine after mixing and compounding, and continuing to process them by shear mixing for 2 minutes, and controlling the chamber to a temperature of 150°C; if necessary the temperature can be adjusted by steam heating or chilled water cooling;
(4) throwing said gelatine into the open mixing machine to mix said gelatine and bind them twice in order to achieve the best effect of dispersion for sheeting;
(5) using a sheet extruder to produce foamed plastic sheets, and the thickness of the plastic sheet is 2.5 mm, the length and width of it is respectively 80% of that of the mould, and then cooling the plastic sheets below 40°C in order to pile them, and the height of the pile of plastic sheets should be no more than 30cm in order to prevent the sheets in the middle of the pile from being heated and deteriorating;
(6) putting a certain number of foamed plastic sheets in the mould of forming machine of foam, and raising the temperature and pressure in order to facilitate the crosslinking reaction of the foamed plastic sheets, and controlling the temperature of mould between 160°C and 185°C, and the foaming time of mould of 1mm thickness is 2-2.5 minutes;
(7) releasing the pressure to obtain the foamed plastic sheets;
(8) leaving the foamed plastic sheets for 6 hours, and then cutting, peeling, shaping and polishing twice them in order to obtain products of foamed plastic.

6. Preparation method of a degradable environment-friendly type polypropylene foamed plastic according to claim 5, wherein said basis material also contains M108R, and, after said step 2, throwing M108R into the gelatine after mixing and compounding and continuing to process them by shear mixing for 2 minutes, and then following said step 3, the time of shear mixing is extended to 15 minutes, and unloading the gelatine after melting and gelling of the polymer.

7. Preparation method of a degradable environment-friendly type polypropylene foamed plastic according to claim 5, wherein said basis material also contains M503, and, after said step 2, throwing M503 into the gelatine after mixing and compounding and continuing to process them by shear mixing for 2 minutes, and then following said step 3, the time of shear mixing is extended to 15 minutes, and unloading the gelatine after melting and gelling of the polymer.
